(19) Europäisches Patentamt
European Patent Office
Office européen des brevets

(11) **EP 1 773 012 A1**

(12) **EUROPEAN PATENT APPLICATION**

(43) Date of publication:
**11.04.2007 Bulletin 2007/15**

(51) Int Cl.:
*H04L 12/66* (2006.01)    *H04L 12/56* (2006.01)
*H04L 29/06* (2006.01)

(21) Application number: **05292065.9**

(22) Date of filing: **05.10.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (72) Inventor: **Accarion, Michel**<br>**44300 Nantes (FR)**<br><br>(74) Representative: **El Manouni, Josiane et al**<br>**Alcatel Lucent**<br>**Intellectual Property & Standards**<br>**54 rue La Boétie**<br>**75008 Paris (FR)** |
| (71) Applicant: **Alcatel Lucent**<br>**75008 Paris (FR)** | |

(54) **Method and apparatus for transport of circuit switched services over a transport network in packet mode**

(57)    An object of the present invention is a method for the transport of circuit switched services in packet mode over a transport network between a source gateway and a destination gateway, using a transport protocol stack comprising a network layer and an upper layer using the services of said network layer, characterized in that said upper layer, referred to as a compound layer, provides services of a real time transport protocol to a higher layer, said method comprising, in a source gateway, a step of, in said upper layer:
- forming at least one protocol data units stream from at least one circuit switched services data stream, by adding header information to payload data from said at least one circuit switched services data stream, said header information comprising information enabling to provide said services of a real time transport protocol to said higher layer, for said a least one circuit switched services data stream.

FIG_12

Printed by Jouve, 75001 PARIS (FR)

**Description**

The present invention generally relates to telecommunication systems.

The present invention more particularly relates to the transport of circuit switched services over a transport network in packet mode.

In particular the present invention applies to the transport of data between Media Gateways (MGWs) across the Circuit Switched (CS) domain of a mobile core network.

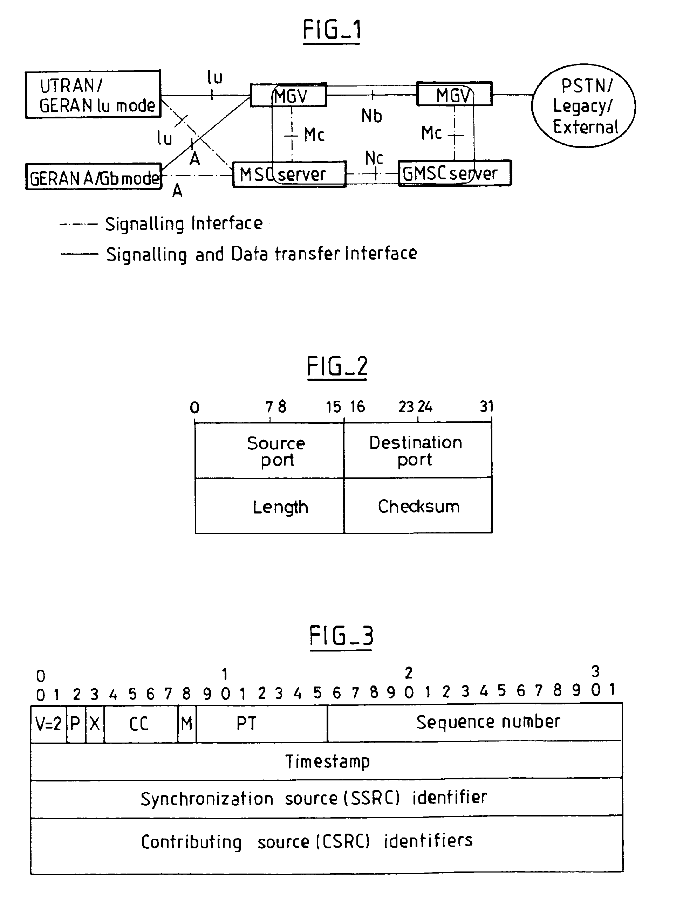

In particular the present invention applies to the transport of data over the Nb interface of of a CS core network, as defined in particular in 3GPP TS 29.414 published by the 3GPP (3rd Generation Partnership Project), of which figure 1 is taken back. This example of application to 3GPP Nb interface or 3GPP core network will also be referred to hereinafter as 3GPP Nb or 3GPP application. The example of application to an interface other than 3GPP Nb interface or to a core network other than 3GPP core network (also referred to as VoIP interface or VoIP core network) will also be referred to hereinafter as VoIP application (where VoIP stands for Voice over IP, and IP stands for Internet Protocol).

The invention also applies to fixed networks, in particular for transport between trunk gateways (GWs) in a fixed core network.

The core network may be IP based (IP V4, IP V6) or MPLS (Multi-Protocol Label Switching) based. In the case for example of a transport network using the IP protocol, data corresponding to circuit switched services are generally delivered over RTP/UDP/IP (where RTP stands for Real Time transport Protocol, and UDP stands for User Datagramm Protocol).

The UDP protocol is disclosed in particular in RFC 768 published by the IETF (Internet Engineering Task Force). The format of the UDP header is recalled in figure2. It comprises the following fields: Source Port : 16 bits, Destination Port : 16 bits, Length: 16 bits, Checksum: 16 bits.

The RTP protocol is disclosed in particular in RFC 3550 published by the IETF. The format of the RTP header is recalled in figure3. It comprises the following fields: version (V) : 2 bits, padding (P) : 1 bit, extension (X) : 1 bit, CSRC count (CC): 4 bits, Marker (M): 1 bit, Payload type (PT) : 7 bits, sequence number: 16 bits, timestamp : 32 bits, SSRC : 32 bits, CSRC list : 0 to 15 items, 32 bits each.

The RTP protocol uses the RTCP protocol (Real Time Control Protocol), also disclosed in RFC 3550, to provide control services for an RTP session, such as QoS (Quality of Service) feedback, session identification, and synchronisation information.

Generally, in the case of transport of Circuit Services (CS) in packet mode over IP using RTP/UDP/IP, there is one CS PDU (Circuit Services Protocol Data Unit) per IP packet.

This leads to the following overheads:

- IP header: IP v4 header is 20 bytes long, IP v6 header 40 bytes long
- UDP header (RFC 768): 8 bytes long
- RTP header (RFC 3550): 12 bytes long

The total header length is then 40 bytes in IP v4, and 60 bytes in IP v6.

In addition, overhead of the layer 2 is also to take in account when provisioning the bandwidth in the core network.

If Ethernet V2 is used, there are before the IP packet:

- The preambule of 8 bytes
- The Source MAC address (6bytes)
- The Destination MAC address (6 bytes)
- The type field (2 bytes)

And following the IP packet:

- The FCS (4 bytes)
- The Frame intergap (12 bytes)

The layer 2 overhead is 38 bytes (Ethernet V2 case, and 42 bytes if 802.1 q is used).

The total overhead is then 78 bytes (Ethernet V2, IP V4).

Now considering the payload itself, the following sums some 3GPP Nb interface cases:

- AMR (Adaptive Multi Rate) 12.2 kbps: 31 bytes from the codec (each 20 ms)
- AMR 10,2 kbps: 26 bytes from the codec (each 20 ms)
- AMR 7,95 Kbps: 20 bytes from the codec (each 20 ms)

- ...
- 64 kbps packetized :40 bytes (each 5ms)

Focus on the widely used cases:

- AMR 12.2 kbps: the payload is then 35 bytes (4 bytes for 3GPP Nb header + 31 bytes from the codec)
- G.711 5 ms/ CS data service: 44 (4+40) bytes.

So it appears that the overheads are larger than the payload. This results in huge bandwidth consumption in the core network.

For voice service, silence is detected and SID (Silence Descriptor) frames (5 bytes for AMR SID) are sent. This should lower a bit the average needed bandwidth, but unfortunately, transport of SID frames results in padding as the minimum Ethernet size (64 bytes) in not reached with these SID packets.

In case of a 3GPP Nb interface, the bandwidth consumed for an AMR2 12.2 kbps (35% of silence) call can be computed by:

$$(38+20+8+12+4+31)*1000/20*8*0,65 +$$

$$(38+20+8+12+4+5 + padding\ of\ 15\ bytes)*1000/160*8*0,35$$

$$= 31,16\ kbps$$

Additional bandwidth should be added (RFC 3550) for RTCP. It is estimated to 0,3 kbps with one Sender (SR) report every 5 seconds. Then the total is 31,46 kbps per AMR 12.2 kbps call. The overhead is high: (31,46- 12,2)/12,2= 158%

If MPLS is used, the standard way is to transport the IP packet in an MPLS packet. MPLS adds at minimum 4 bytes for the MPLS shim header (1 label stacked). The bandwidth to provision goes from 31,46 kbps to 32,51 kbps (Ethernet V2).

In case of VoIP interface, many compressing codecs can be used such as G.729 40 Kbps, G.729 32 Kbps, G. 729-A at 8 kbps with the same kind of results and a degradation of the voice quality due to many transcoding stages in the end to end communication path.

Using G.711 packetized (VoIP: 20 ms of voice frame) leads to a bandwidth need of 95,5 kbps.

Note: If Packet over Sonet (POS) is used as a layer 2, the Ethernet V2 overhead (38 bytes) is replaced by a shorter one (7 bytes) due to the HDLC framing used by POS.

Therefore, in a general way, the transport of Circuit Switched services data such as in particular compressed voice (or more generally low bit rate applications) in packet mode raises a problem of efficiency, due to the important overhead brought by the RTP/UDP/IP with respect to the low payload value that comes with compressing codecs such as the AMR codec.

There has been a lot of work done on the subject of IP header compression in the IETF community. The following list of RFC gives an idea of the work already done:

- RFC 2507 IP header compression, Feb 99
- RFC 2508 Compressing IP/UDP/RTP Headers for low speed Serial Links, Feb 99
- RFC 3095 Robust Header Compression (ROHC), July 2001
- RFC 3545 Enhanced Compressed RTP (CRTP) for links with High Delay, Packet Loss and Reordering
- ...

These approaches do not fit for an optimized transport between MGWs crossing an IP network or an MPLS network. The main reason is that forwarding in IP routers need a full IP header.

Another way would be to use an IP tunnel and compress the IP/UDP/RTP headers of the tunnelled packet. This approach is computation intensive as the basis is a differential compression scheme (i.e avoid to transmit fields that are either identical or fields that evolve in a predictive way when considering two consecutive sent packets). More, packet loss in the IP network lead to de-synchronisation issues between the compressor and the de-compressor.

The MPLS FR Alliance Forum has standardized a Voice Over MPLS (VOMPLS) in the MFA 1.0 body. This approach has two main drawbacks: first, it applies only to an MPLS core, and secondly, one LSP can carry only 248 VOMPLS calls (then need signalling power to establish and release LSP).

The present invention in particular enables to solve part or all of the above-mentioned problems, or to avoid part or all of the above-mentioned drawbacks. More generally, the present invention enables to improve the performances

# EP 1 773 012 A1

in such systems, in particular by providing a solution which enables significant gain in bandwidth saving, while remaining simple to implement and not requiring too much processing resources.

These and other objects are achieved, in one aspect of the present invention, by a method for the transport of circuit switched services in packet mode over a transport network between a source gateway and a destination gateway, using a transport protocol stack comprising a network layer and an upper layer using the services of said network layer, characterized in that said upper layer, referred to as a compound layer, provides services of a real time transport protocol to a higher layer, said method comprising, in a source gateway, a step of, in said upper layer:

- forming at least one protocol data units stream from at least one circuit switched services data stream, by adding header information to payload data from said circuit switched services data stream, said header information comprising information enabling to provide services of a real time transport protocol to said higher layer, for said at least one circuit switched services data stream.

These and other objects are achieved, in another aspect of the present invention, by a method for the transport of circuit switched services in packet mode over a transport network between a source gateway and a destination gateway, using a transport protocol stack comprising a network layer and an upper layer using the services of said network layer, characterized in that said upper layer, referred to as a compound layer, provides services of a real time transport protocol to a higher layer, said method comprising, in a destination gateway, a step of, in said upper layer:

- forming at least one circuit switched services data stream from at least one protocol data units stream, by removing header information from payload data from said at least one circuit switched services data stream, said header information comprising information enabling to provide said services of a real time transport protocol to said higher layer, for said at least one circuit switched services data stream.

These and other objects are achieved, in another aspect of the present invention, by a gateway acting as a source gateway for the transport of circuit switched services in packet mode over a transport network between a source gateway and a destination gateway, using a transport protocol stack comprising a network layer and an upper layer using the services of said network layer, characterized in that said upper layer, referred to as a compound layer, provides services of a real time transport protocol to a higher layer, said gateway comprising, in said upper layer:

- means for forming at least one protocol data units stream from at least one circuit switched services data stream, by adding header information to payload data from said at least one circuit switched services data stream, said header information comprising information enabling to provide said services of a real time transport protocol to said higher layer, for said at least one circuit switched services data streams.

These and other objects are achieved, in another aspect of the present invention, by a gateway acting as a destination gateway for the transport of circuit switched services in packet mode over a transport network between a source gateway and a destination gateway, using a transport protocol stack comprising a network layer and an upper layer using the services of said network layer, characterized in that said upper layer, referred to as a compound layer, provides services of a real time transport protocol to a higher layer, said gateway comprising, in said upper layer:

- means for forming at least one circuit switched services data stream from at least one protocol data units stream, by removing header information from payload data from said at least one circuit switched services data stream, said header information comprising information enabling to provide said services of a real time transport protocol to said higher layer, for said at least one circuit switched services data stream.

These and other objects of the present invention will become more apparent from the following description taken in conjunction with the accompanying drawings:

- figure 1 is intended to illustrate an example of transport network to which the present invention applies,
- figure 2 is intended to recall the header format for the UDP protocol,
- figure 3 is intended to recall the header format for the RTP protocol,
- figure 4 is intended to illustrate an example of structure for data transport according to the present invention,
- figure 5 is intended to illustrate an example of format of a protocol version octet,
- figure 6 is intended to illustrate an example of a first header format,
- figure 7 is intended to illustrate an example of a second header format,
- figure 8 is intended to illustrate another example of a first header format,
- figure 9 is intended to illustrate another example of a second header format,

- figure 10 is intended to illustrate an example of a third header format,
- figure 11 is intended to illustrate the improvement in bandwidth saving with the present invention,
- figure 12 is intended to illustrate an example of a method according to the present invention and/or an example of means to be provided in a source gateway and in a destination gateway, for carrying out a method according to the present invention.

The present invention may also be explained as follows, considering for example the case of a IP-based transport network, it being understood that the present invention equally applies to other examples such as in particular MPLS.

In one of its different aspects, the present invention suggests a new approach based on the following features, which may be considered individually or in combination:

- keeps the RTP /RTCP main concepts; a combined UDP-RTP header with shortened fields is defined;
- aggregates CS core PDUs in a single packet while introducing a very low jitter (max proposed value is 500 micro seconds) ;
- applies to VoIP core network as well as 3GPP IP core network (i.e, codecs like G.71 1, G.729...).

In another of its different aspects, the present invention in particular recognizes that some of the UDP header fields can advantageously be dropped, others can advantageously be shortened, and others can advantageously be kept unchanged, based in particular on the following observations:

- UDP Destination Port (16 bits) : identifies the bearer at the destination IP port. It is signalled via IPBCP protocol (IP Bearer Control Protocol). This can be kept. This gives 30 K bearers per IP address (as other 30 K values are used for RTCP). Notice this approach fits well with a Ge interface capacity.
- Source Port (16 bits) : This identifies the bearer at the sending source IP port. It is used to validate the payload by controlling the 4 uple (Source IP address, Destination IP address, Source UDP port, destination UDP port). The control on the IP (source/destination) addresses plus the control on the destination port is sufficient in a MG to MG context. Encryption / authentication are more powerful tools in case of DOS attack than those controls.
- Length (16 bits) : UDP packet length. Notice that the current practice is one UDP packet in an IP packet. So this length field is somewhat redundant with the Total Length field of the IP header, knowing that no IP options are used in the "fast path". This information is really needed when multiplexing several CS PDU in a packet, but this field can be shortened.

  o VoIP G.71 1 packets are sent every 20 ms. This gives a payload of 160 bytes
  o 3GPP G.71 1 packets are sent each 5 ms. This gives a payload of 44 bytes, Nb header included.
  o 3GPP AMR packets are sent each 20 ms. AMR12.2 kbps leads to a payload of 35 bytes
  So this field can be shortened down to 8 bits for CS packet transport.

- Checksum (16 bits) : checksum on the payload. This can be dropped because transport protocol with FCS are used in the core network (Ethernet, POS).

In another of its different aspects, the present invention also recognizes that some of the RTP header fields can advantageously be dropped, others can advantageously be shortened, and others can advantageously be kept unchanged, based in particular on the following observations:

- Version(2 bits) : identifies RTP version. Value is 2. This can be kept, value 3 for example will identify a compound UDP-RTP header in according to the present invention. Both standard RTP and new compound UDP-RTP can coexist on an IP port.
- P bit (1 bit) : identifies if a padding octet exist. May be needed for some encryption mechanism.
- X bit (1 bit) : identifies a RTP header extension. No need in our context.
- CC bits (4 bits) : CSRC count. Not used in our context as no mixer usage.
- M bit (1 bit) : Marker bit. This can be kept. Used in VoIP context when talk spurt resumes after silence, or for DTMF digits support (RFC 2833).
- PT bits (7 bits) : Payload type. Identifies the format of the RTP payload. Signalled in H.248 messages between MGC (Media Gateway Control)and MG. Dynamic value of PT, meaning PT value per bearer, is the standard (Table 4/ RFC 3551). This can be kept.
- Sequence Number (16 bits) : RTP packet number, it increments by one at each new RTP packet of this session.This information is really needed to identify missing packets in the user plan and for RTCP need to compute packet loss rate. This can be shortened for many reasons. One reason is the QOS need, the transport should offer low loss (eg, see 3GPP TS 23.107, QOS concept and architecture, and 3GPP TR 25.853 Delay budget within the Access Stratum /Table 1)

- Timestamp (32 bits) : As an example, the timestamp clock would likely increment by one for each sampling period. Sampling period values are 8kHz or 16 kHz in the considered examples. Initial value shall be random. This can be shortened (eg , 15 bits gives 2 seconds before wrapping for 16 KHz clock resolution).
- Synchronisation source ld (SSRC) (32 bits) : Source identification. Shall be unique in a particular session. The UDP port is used instead to identify the bearer. Limitation to 30 K bearers per IP address is acceptable in the considered examples: one IP card can be capable of 30 K Erl with one IP address on a Ge port.
- Contributing source Id (CSRC) (32 bits) : Contributing source. Needed when a mixer combines several sources. This can be dropped as there is no mixer in the considered examples. Conference is done using specialized TDM circuits that adds each party to build the output signal. This output signal is packetized depending on the destination codec, or transmitted in TDM G.71 1 A law / mu law.

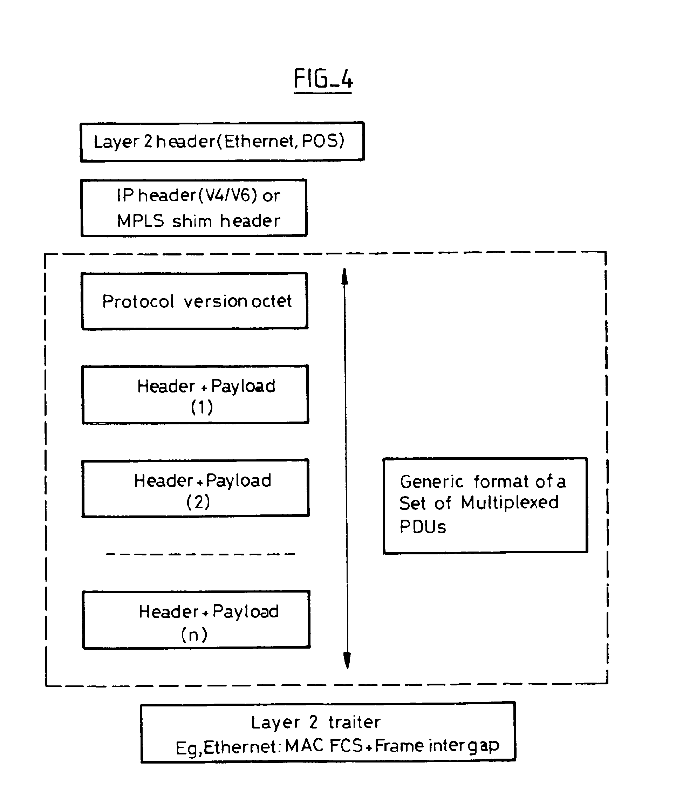

In another of its different aspects, the present invention proposes a structure for the transport of circuit switched services data over a transport network in packet mode. An example of such a structure is illustrated in figure 4. There is illustrated a structure comprising, in this example:

- a layer 2 header (for example Ethernet or POS),
- a IP header (IP V4 or IP V6) or a MPLS shim header,
- a set of multiplexed PDUs (Protocol Data Units), comprising

    • a protocol version octet
    • a header + payload (1)
    • a header + payload (2)
    • ...
    • a header + payload (n)

- a layer 2 trailer (for example, Ethernet: MAC FCS + Frame inter gap).

The multiplexing of PDUs into a set of multiplexed PDUs, such as illustrated for example in figure 4, is for example such that:

- The new format and the one currently standardized can coexist simultaneously on an IP interface. A single format (the new one or the currently standardized) is used for a bearer. Then remote MGWs that know this new format can be interfaced as well as MGWs that ignore it.

    o The feature relies on setting of a new protocol identification in the IP header (no use of UDP).

- Bearers that go to the same IP destination (or LSP) and with the same QOS may be multiplexed in the same pipe. As example, there may be different DiffServ class used in VoIP networking.
- An aggregation timer is set when a PDU enters an empty pipe. This timer value is configurable and limits the jitter introduced on a multiplexed PDUs. The recommended value is 500 microseconds.

There are two other parameters to limit the aggregation:

    o Maximum total packet size in bytes,
    o Maximum number of multiplexed PDUs.

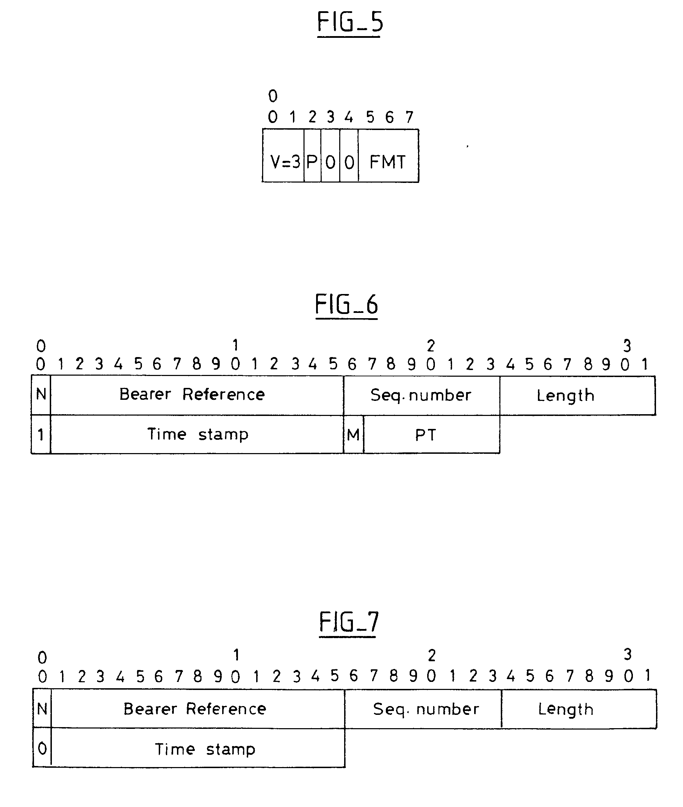

All those three parameters are configurable.
In another of its different aspects, the present invention proposes a format for a protocol version octet. An example of such a format of a protocol version octet is illustrated in figure 5. In this example:

- The version bits V are set to 3 in order that an implementation based on RTP (" enhanced RTP") discriminates immediately this format from the standard one (V=2). For RTCP, the version 2 still applies without any change in the stack.
- The P bit of the standard RTP header has been kept. Padding for 32 bits alignment may be needed for encryption (see RFC 3550 for details). If padding is requested, it is done on the set of multiplexed PDUs.

- The format field (FMT) is a three bit field. It indicates which header format set is used.

  o FMT = '001'b and '010'b are defined below
  o Other values are reserved for future use.

In another of its different aspects, the present invention proposes different header formats.Examples of such header formats are illustrated in figures 6 to 10.

As an example, three types of header format, referred to respectively as first, second, and third, header format, will be considered in the following.

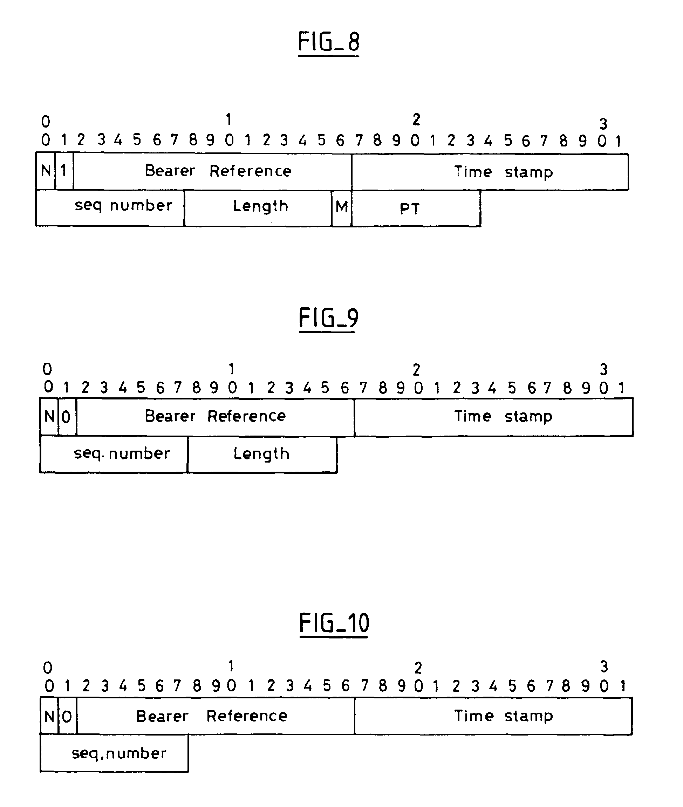

A first and a second example of the first header format are illustrated respectively in figures 6 and 8.

In the example illustrated in figure 6:

Bit 0 of octet 5 set to '1'b indicates this first format (7 bytes long).

In the example illustrated in figure 8:

Bit 1 of octet 0 set to '1'b indicates this first format (7 bytes long).
In the examples illustrated in figures 6 and 8:

- The N bit indicates if a next PDU header (and its payload) is following Length bytes after this header.
- The Bearer Reference identifies the bearer at the destination side. Value is equal to the destination UDP port divided by two. UDP port is an even number (RFC 3550). It is allocated by the MG and signalled by H.248 or IPBCP.
- The sequence number field has the same role as the RTP standard sequence number. It is shortened from 16 bits to 8 bits (256 packets).
- The Length field gives the PDU length. It is 8 bits long, so covers all CS packets (TS 26.102, TS 26.201, TR 23.910, RFC 3551).
- The timestamp has the same usage as in the standard RTP. The field is shortened from 32 bits to 15 bits. Between MGWs,

  o the clock reference is 16 Khz for 3GPP Nb, the timestamp modulo is then 2 seconds (100 packets spaced by 20 ms).
  o 8 KHz for VOIP, the modulo is then 4 seconds (200 packets spaced by 20 ms).

- The M bit has the usage as in the standard RTP.
- The PT field is 7 bits as in the standard RTP. Value is signaled in H.248.

In the example illustrated in figure 6, the above-mentioned fields are placed in the following order: N, Bearer Reference, Sequence Number, Length, Timestamp, M, PT.

In the example illustrated in figure 8, the above-mentioned fields are placed in the following order: N, Bearer Reference, Timestamp, Sequence Number, Length, M, PT.

A first and a second example of the second header format are illustrated respectively in figures 7 and 9.

In the example illustrated in figure 7:

Bit 0 of octet 5 set to '0'b indicates this format (6 bytes long).

In the example illustrated in figure 9:

Bit 1 of octet 0 set to '0'b indicates this format (6 bytes long).
In the examples illustrated in figures 7 and 9:

The main difference between the first and the second header format is that with the second header format, the value of M and PT fields are inherited from a previous PDU.

In the example illustrated in figure 7, the above-mentioned fields are placed in the following order: N, Bearer Reference, Sequence Number, Length, Timestamp.

In the example illustrated in figure 9, theabove-mentioned fields are placed in the following order: N, Bearer Reference, Timestamp, Sequence Number, Length.

The FMT field of the protocol version octet may for example have the following values:

FMT='001'b: VoIP application
M and PT fields are present in the PDU following the protocol version octet (i.e the first PDU uses Format 1, figure 6 or 8).

Next PDU may use Format 2 (figure 7 or 9) if it can inherit the M and PT fields from the previous PDU, and so on. Inheritance is statistical. If M or PT fields are different from the previous PDU(s), inheritance cannot be done and the next PDU uses Format 1 (Figure 6 or 8).

## FMT= '010'b: 3GPP Nb application

M and PT fields are not present in the first PDU (Format 2). All PDUs should preferably use Format 2:

- The M bit is omitted as ignored by 3GPP TS 29.414 (section 6.2.3.1.5)
- The payload type (PT field) can be omitted between MGW as the IuFP header is self sufficient (An example of a second header format, according to a first TS 25.415)

Note: 3GPP IuFP header has a sequence number field of 4 bits which increments by one each 20 ms. This sequence number cannot be used as a RTP time stamp due to its too weak resolution.
An example of a third header format is illustrated in figure 10. In this example:

Bit 1 of octet 0 set to '0'b indicates this header format (5 bytes long).

The main difference between the second and the third header format is that with the third format, the Length value is inherited from a previous PDU.
In the example illustrated in figure 10, the following fields are provided, in the following order: N, Bearer Reference, Timestamp, Sequence Number.

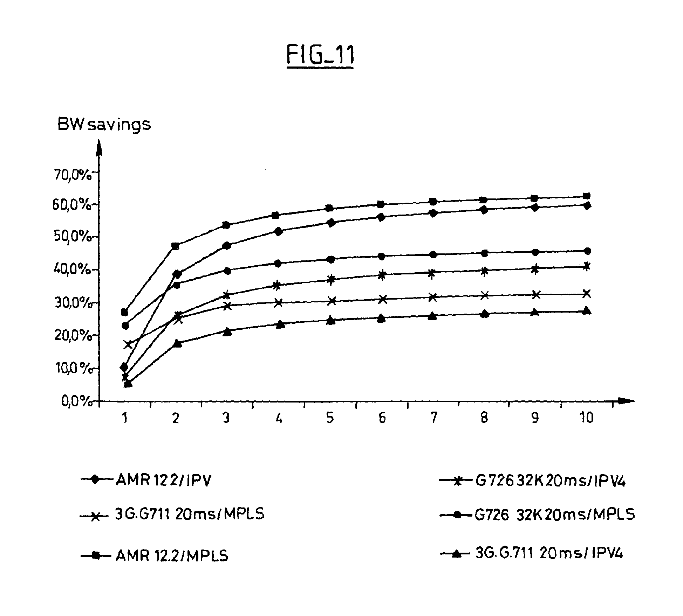

Figure 11 is intended to illustrate the improvement in bandwidth saving with the present invention.
Considering for example the case of IP core:

- Assuming an average of 5 PDUs multiplexed per IP packet, the new bandwidth required to transport the AMR2 codec (12.2 kbps) on a 3GPP Nb IPv4 interface with Ethernet v2 transport becomes:

$$((38+20+1+(6+4+31)*5 -4)*(1000/20)*8*0,65)/5 +$$
$$((38+20+1+(6+4+5)*5 -4)*(1000/160)*8*0,35)/5 = 13,98 \text{ kbps}$$

Adding the amount for standard RTCP leads to 13,98+0,3= 14,3 kbps
This computation needs further refinement as SID packets may aggregate with PDU in any fashion, but gives an idea of the new bandwidth need.
Considering for example the case of MPLS core:

Suppose that MPLS is available end to end between MGWs. Then, MGW will establish (using RSVP-TE, RFC 3209) LSP with QOS characteristics. When LSP are established end to end, it is useless to transmit the IP header. In another way, the generic format of multiplexed PDUS follows the MPLS header. This will bring further bandwidth savings as one MPLS label is 4 bytes compared to an IPv4 header of 20 bytes (40 bytes is IP V6) following the MPLS header.

Assuming an average of 5 PDUs multiplexed per packet, the new bandwidth required to transport the AMR2 codec (12.2 kbps) with Ethernet v2 transport becomes:

- 

$$((38+4+1+(6+4+31)*5-4)*(1000/20)*8*0,65)/5 +$$

$$((38+4+1+(6+4+5)*5)-4)*(1000/160)*8*0,35)/5 = 13,09 \text{ kbps}$$

Adding the same amount for standard RTCP leads to: 13,09+0,3= 1 kbps

In conclusion:

In IPv4 case, if we compare with the 32,72 kbps initial value, the total bandwidth (i.e including Ethernet V2 overhead) needed has been divided by 2,2 (31,46/14,3).

Total bandwidth is reduced by 40 % considering only IP layer (i.e excluding the Ethernet V2 overhead).

MPLS brings an additional moderate gain.

The curves in figure 11 show how the gain evolves with the average number of multiplexed PDUs. It shall be noticed that the gain increases slowly after a small number of multiplexed PDUs.

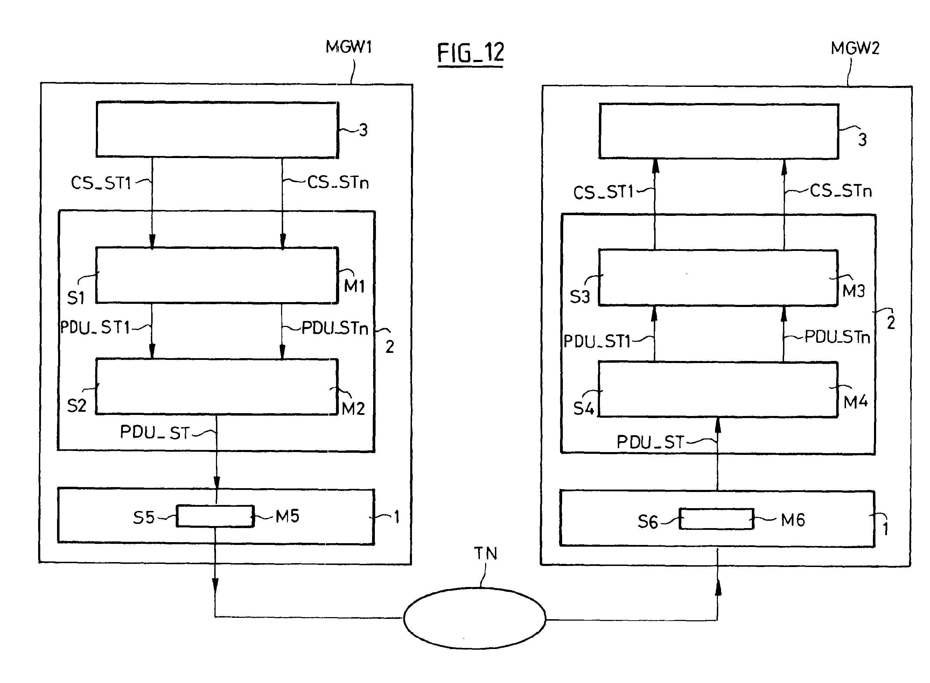

In another of its different aspects, the present invention proposes a method for the transport of circuit switched services over a transport network in packet mode. An example of such a method is illustrated in figure 12.

In figure 12, there is illustrated a method for the transport of circuit switched services in packet mode over a transport network noted TN between a source gateway noted MGW1 and a destination gateway noted MGW2 using a transport protocol stack comprising a network layer noted 1, and an upper layer noted 2 using the services of said network layer.

According to one aspect of the present invention, said upper layer 2, referred to as a compound layer, provides services of a real time transport protocol to a higher layer noted 3, and said method comprises, in a source gateway MGW1, in said upper layer 2, further to other processing not shown and which may be classical:

- a step noted S1 of forming at least one protocol data units stream noted PDU-ST1 from at least one circuit switched services data stream noted CS-ST1, by adding header information to payload data from said circuit switched services data stream, said header information comprising information enabling to provide said services of said real time transport protocol to said higher layer, for said at least one circuit switched services data stream.

Said real time transport protocol may in particular correspond to the RTP protocol, or more generally to any protocol adapted to the transport, over a packet network, of traffic having real time constraints (i.e. traffic having the highest requirements in terms of quality of service, such as is the case for circuit switched services), and providing the same kind of services as the RTP protocol, including in particular sequence numbering, timing delivery monitoring, payload type identification.

Advantageously, as illustrated in figure 12 :

- said step S1 corresponds to a step of forming a plurality of protocol data units streams noted PDU-ST1...PDU-STn from a plurality of circuit switched services data streams noted CS-ST1...CS-STn, by adding header information to payload data from said circuit switched services data streams, said header information comprising information enabling to provide said services of a real time transport protocol to said higher layer, independently for each of said circuit switched services data streams,
- there is further provided a step noted S2, of multiplexing said plurality of protocol data units streams PDU-ST1...PDU-STn into a set of multiplexed protocol data units streams, noted PDU-ST.

According to another aspect, said method comprises, in a destination gateway MGW2, in said upper layer 2, further to other processing not shown and which may be classical:

- a step noted S3 of forming at least one circuit switched data units stream CS-ST1 from at least one protocol data unit stream PDU-ST1, by removing header information from payload data from said protocol data units stream PDU-ST1, said header information comprising information enabling to provide said services of a real time transport protocol to said higher layer, for said at least one circuit switched services data stream.

Advantageously, as illustrated in figure 12 :

- said step S3 corresponds to a step of forming a plurality of CS data streams noted CS-ST1...CS-STn from a plurality of protocol data units streams noted PDU-ST1...PDU-STn, by removing header information from payload data from said protocol data units streams, said header information comprising information enabling to provide said services of a real time transport protocol to said higher layer, independently for each of said circuit switched services data streams,
- there is further provided a step noted S4, of de-multiplexing said plurality of circuit switched data streams CS-ST1...CS-STn from a set of multiplexed protocol data units streams, noted PDU-ST.

Advantageously, as illustrated in figure 12, there is further provided, in a source gateway MGW1, in said network layer 1, further to other processing not shown and which may be classical:

- a step noted S5, of setting a protocol field of a network layer header, to a value associated to said compound layer, enabling to identify an upper layer as corresponding to said compound layer.

Advantageously, as illustrated in figure 12, there is further provided, in a destination gateway MGW2, in said network layer 1, further to other processing not shown and which may be classical:

- a step noted S6, of identifying an upper layer as corresponding to said compound layer, from a protocol field of a network layer header, set to a value associated to said upper layer.

Figure 12 also illustrates an example of means to be provided in said source and destination gateways, to carry out such methods.
In figure 12, there is illustrated a source gateway comprising, in said upper layer, further to other processing not shown and which may be classical:

- means noted M1 for forming at least one protocol data units stream noted PDU-ST1 from at least one circuit switched services data stream noted CS-ST1, by adding header information to payload data from said at least one circuit switched services data stream, said header information comprising information enabling to provide said services of a real time transport protocol to said higher layer, for said at least one circuit switched services data stream.

Advantageously :

- said means M1 correspond to means for forming a plurality of protocol data units streams noted PDU-ST1...PDU-STn from a plurality of circuit switched services data streams noted CS-ST1...CS-STn, by adding header information to payload data from said circuit switched services data streams, said header information comprising information enabling to provide said services of a real time transport protocol to said higher layer, independently for each of said circuit switched services data streams,
- there is further provided means M2 for multiplexing said plurality of protocol data units streams PDU-ST1...PDU-STn into a set of multiplexed protocol data units streams, noted PDU-ST.

In figure 12, there is illustrated a destination gateway comprising, in said upper layer, further to other processing not shown and which may be classical:

- means M3 for forming at least one circuit switched data units stream CS-ST1 from at least one protocol data unit stream PDU-ST1, by removing header information from payload data from said protocol data units stream PDU-ST1, said header information comprising information enabling to provide said services of a real time transport protocol to said higher layer, for said at least one circuit switched services data stream.

Advantageously, as illustrated in figure 12 :

- said means M3 correspond to means for forming a plurality of CS data streams noted CS-ST1...CS-STn from a plurality of protocol data units streams noted PDU-ST1...PDU-STn, by removing header information from payload data from said protocol data units streams, said header information comprising information enabling to provide said services of a real time transport protocol to said higher layer, independently for each of said circuit switched services data streams,
- there is further provided means M4 for de-multiplexing said plurality of circuit switched data streams CS-ST1...CS-STn from a set of multiplexed protocol data units streams, noted PDU-ST.

Advantageously, as illustrated in figure 12, there is further provided, in a source gateway MGW1, in said network layer 1, further to other processing not shown and which may be classical:

- means noted M5 for setting a protocol field of a network layer header, to a value associated to said compound layer, enabling to identify an upper layer as corresponding to said compound layer.

Advantageously, as illustrated in figure 12, there is further provided, in a destination gateway MGW2, in said network layer 1, further to other processing not shown and which may be classical:

- means noted M6 for identifying an upper layer as corresponding to said compound layer, from a protocol field of a network layer header, set to a value associated to said upper layer.

Advantageously, said compound layer corresponds to a compound RTP/UDP layer, said header information comprising first header information enabling to provide services of the UDP protocol, and second header information enabling to provide services of the RTP protocol.
Advantageously, said first information comprises destination port number information.
Advantageously, said first information comprises protocol data unit length information.
Advantageously, said first information comprises information indicating the location of a next protocol data unit in a set of multiplexed protocol data units.
Advantageously, said second information comprises sequence number information.
Advantageously, said second information comprises timestamp information.
Advantageously, said second information comprises payload type information.
Advantageously, said second information comprises marker information.
Advantageously, at least two header formats are defined:

- a first header format, comprising marker information followed by payload type information,
- a second header format, not comprising marker information and payload type information, and :

- in the case of transport over a 3GPP CS core network, said second header format is used,
- in the case of transport over a VoIP core network, said first header format is used for a first protocol data unit of a set of multiplexed protocol data units, and said second header format is used for following protocol data units of said set of multiplexed protocol data units as long as marker information and payload type information can be inherited from said previous protocol data unit.

Advantageously, at least two header formats are defined:

- a third header format, not comprising length information,
- another header format, comprising length information, and :

- in the case of transport over a 3GPP CS core network, said third header format is used,

in the case of transport over a VoIP core network, said other header format is used for a first protocol data unit of a set of multiplexed protocol data units, and said third header format is used for following protocol data units of said set of multiplexed protocol data units as long as length information can be inherited from said previous protocol data unit.
Advantageously, said header information added to said payload data comprises header format information enabling to identify a header format.
Advantageously, said header information comprises protocol version information enabling to associate a version value of the RTP protocol to said compound layer.
The detailed implementation of the above-mentioned means does not raise any special problem for a person skilled in the art, and therefore such means do not need to be more fully disclosed than has been made above, by their function, for a person skilled in the art.

## Claims

1. A method for the transport of circuit switched services in packet mode over a transport network between a source gateway and a destination gateway, using a transport protocol stack comprising a network layer and an upper layer using the services of said network layer, **characterized in that** said upper layer, referred to as a compound layer, provides services of a real time transport protocol to a higher layer, said method comprising, in a source gateway, a step of, in said upper layer:

- forming at least one protocol data units stream from at least one circuit switched services data stream, by adding header information to payload data from said at least one circuit switched services data stream, said header information comprising information enabling to provide said services of a real time transport protocol to said higher layer, for said at least one circuit switched services data stream.

2. A method according to claim 1, comprising, in a source gateway, the steps of, in said upper layer:

- forming a plurality of protocol data units streams from a plurality of circuit switched services data streams, by adding header information to payload data from said circuit switched services data streams, said header information comprising information enabling to provide said services of a real time transport protocol to said higher layer, independently for each of said circuit switched services data streams,
- multiplexing said plurality of protocol data units streams into a set of multiplexed protocol data units streams.

3. A method according to any of claims 1 or 2, further comprising, in a source gateway, a step of, in said network layer:

- setting a protocol field of a network layer header, to a value associated to said compound layer, enabling to identify an upper layer as corresponding to said compound layer.

4. A method for the transport of circuit switched services in packet mode over a transport network between a source gateway and a destination gateway, using a transport protocol stack comprising a network layer and an upper layer using the services of said network layer, **characterized in that** said upper layer, referred to as a compound layer, provides services of a real time transport protocol to a higher layer, said method comprising, in a destination gateway, a step of, in said upper layer:

- forming at least one circuit switched services data stream from at least one protocol data units stream, by removing header information from payload data from said at least one circuit switched services data stream, said header information comprising information enabling to provide said services of a real time transport protocol to said higher layer, for said at least one circuit switched services data stream.

5. A method according to claim 4, comprising, in a destination gateway, the steps of, in said upper layer:

- forming a plurality of circuit switched services data streams from a plurality of protocol data units streams, by removing header information from payload data from said circuit switched services data streams, said header information comprising information enabling to provide services of a real time transport protocol to said higher layer, for said independently for each of said circuit switched services data streams,
- de-multiplexing said plurality of protocol data units streams from a set of multiplexed protocol data units streams.

6. A method according to any of claims 4 or 5, further comprising, in a destination gateway, a step of, in said network layer:

- identifying an upper layer as corresponding to said compound layer, from a protocol field of a network layer header, set to a value associated to said upper layer.

7. A method according to any of claims 1 to 6, wherein said compound layer corresponds to a compound RTP/UDP layer, said header information comprising first header information enabling to provide services of the UDP protocol, and second header information enabling to provide services of the RTP protocol.

8. A method according to claim 7, wherein said first information comprises destination port number information.

9. A method according to claim 7 or 8, wherein said first information comprises protocol data unit length information.

10. A method according to any of claims 7 to 9, wherein said first information comprises information indicating the location of a next protocol data unit in a set of multiplexed protocol data units.

11. A method according to any of claims 7 to 10, wherein said second information comprises sequence number information.

12. A method according to any of claims 7 to 11, wherein said second information comprises timestamp information.

**13.** A method according to any of claims 7 to 12, wherein said second information comprises payload type information.

**14.** A method according to any of claims 7 to 13, wherein said second information comprises marker information.

**15.** A method according to any of claims 1 to 14, used for the transport of data between media gateways in a mobile core network.

**16.** A method according to claim 15, used for the transport of data according to the User Plane protocol over the Nb interface of a 3GPP CS core network.

**17.** A method according to claim 15, used for the transport of data over a VoIP core network.

**18.** A method according to any of claims 1 to 14, used for the transport of data between trunk gateways in a fixed core network.

**19.** A method according to claims 16 and 17, wherein two header formats are defined:

   - a first header format, comprising marker information and payload type information,
   - a second header format, not comprising marker information and payload type information, and wherein:
   - in the case of transport over a 3GPP CS core network, said second header format is used,
   - in the case of transport over a VoIP core network, said first header format is used for a first protocol data unit of a set of multiplexed protocol data units, and said second header format is used for following protocol data units of said set of multiplexed protocol data units as long as marker information followed by payload type information can be inherited from said previous protocol data unit.

**20.** A method according to claims 16 and 17, wherein at least two header formats are defined:

   - a third header format, not comprising length information,
   - another header format, comprising length information,
   and wherein:
   - in the case of transport over a 3GPP CS core network, said third header format is used,
   - in the case of transport over a VoIP core network, said other header format is used for a first protocol data unit of a set of multiplexed protocol data units, and said third header format is used for following protocol data units of said set of multiplexed protocol data units as long as length information can be inherited from said previous protocol data unit.

**21.** A method according to any of claims 1 to 20, wherein said header information comprises header format information enabling to identify a header format.

**22.** A method according to any of claims 1 to 21, wherein said header information comprises protocol version information enabling to associate a version value of the RTP protocol to said compound layer.

**23.** A method according to any of claims 1 to 22, wherein said network layer protocol corresponds to IP (Internet Protocol).

**24.** A method according to any of claims 1 to 22, wherein said network layer protocol corresponds to MPLS (Multi-Protocol Label Switching).

**25.** A gateway, comprising means for carrying out a method according to any of claims 1 to 24.

**26.** A gateway acting as a source gateway for the transport of circuit switched services in packet mode over a transport network between a source gateway and a destination gateway, using a transport protocol stack comprising a network layer and an upper layer using the services of said network layer, **characterized in that** said upper layer, referred to as a compound layer, provides services of a real time transport protocol to a higher layer, said gateway comprising, in said upper layer:

   - means for forming at least one protocol data units stream from at least one circuit switched services data stream, by adding header information to payload data from said at least one circuit switched services data stream, said header information comprising information enabling to provide said services of a real time transport protocol to said higher layer, for said at least one circuit switched services data streams.

27. A gateway according to claim 26, comprising, in said upper layer:

- means for forming a plurality of protocol data units streams from a plurality of circuit switched services data streams, by adding header information to payload data from said circuit switched services data streams, said header information comprising information enabling to provide said services of a real time transport protocol to said higher layer, independently for each of said circuit switched services data streams,
- means for multiplexing said plurality of protocol data units streams into a set of multiplexed protocol data units streams.

28. A gateway acting as a destination gateway for the transport of circuit switched services in packet mode over a transport network between a source gateway and a destination gateway, using a transport protocol stack comprising a network layer and an upper layer using the services of said network layer, **characterized in that** said upper layer, referred to as a compound layer, provides services of a real time transport protocol to a higher layer, said gateway comprising, in said upper layer:

- means for forming at least one circuit switched services data stream from at least one protocol data units stream, by removing header information from payload data from said at least one circuit switched services data stream, said header information comprising information enabling to provide said services of a real time transport protocol to said higher layer, for said at least one circuit switched services data stream.

29. A gateway according to claim 28, comprising, in said upper layer:

- means for forming a plurality of circuit switched services data streams from a plurality of protocol data units streams, by removing header information from payload data from said circuit switched services data streams, said header information comprising information enabling to provide said services of a real time transport protocol to said higher layer, independently for each of said circuit switched services data streams,
- means for de-multiplexing said plurality of protocol data units streams from a set of multiplexed protocol data units streams.

## FIG_1

UTRAN/ GERAN lu mode

GERAN A/Gb mode

MGV

MGV

PSTN/ Legacy/ External

MSC server

GMSC server

lu

lu

A

A

Nb

Mc

Mc

Nc

—·— Signalling Interface

—— Signalling and Data transfer Interface

## FIG_2

| 0 | 7 8 | 15 16 | 23 24 | 31 |
|---|---|---|---|---|
| | Source port | | Destination port | |
| | Length | | Checksum | |

## FIG_3

| 0 | | | | | 1 | | | | 2 | | | | 3 |
|---|---|---|---|---|---|---|---|---|---|---|---|---|---|
| 0 1 | 2 3 4 5 6 7 | 8 | 9 0 1 2 3 4 5 | 6 7 8 9 0 1 2 3 4 5 6 7 8 9 0 1 |

| V=2 | P | X | CC | M | PT | Sequence number |
|---|---|---|---|---|---|---|
| | | | | | Timestamp | |
| | | | Synchronization source (SSRC) identifier | | | |
| | | | Contributing source (CSRC) identifiers | | | |

## FIG_4

Layer 2 header(Ethernet, POS)

IP header(V4/V6) or
MPLS shim header

Protocol version octet

Header + Payload
(1)

Header + Payload
(2)

- - - - - - - - - -

Header + Payload
(n)

Generic format of a
Set of Multiplexed
PDUs

Layer 2 traiter
Eg,Ethernet: MAC FCS + Frame intergap

## FIG_5

```
        0
        0 1 2 3 4 5 6 7
       ┌──────┬─┬─┬─┬──────┐
       │ V=3  │P│0│0│ FMT  │
       └──────┴─┴─┴─┴──────┘
```

## FIG_6

```
 0                   1                   2                   3
 0 1 2 3 4 5 6 7 8 9 0 1 2 3 4 5 6 7 8 9 0 1 2 3 4 5 6 7 8 9 0 1
┌─┬─────────────────────────┬───────────────┬─────────────────┐
│N│    Bearer  Reference     │  Seq. number  │     Length      │
├─┼─────────────────────────┼─┬─────────────┴─────────────────┤
│1│      Time  stamp         │M│         PT                    │
└─┴─────────────────────────┴─┴───────────────────────────────┘
```

## FIG_7

```
 0                   1                   2                   3
 0 1 2 3 4 5 6 7 8 9 0 1 2 3 4 5 6 7 8 9 0 1 2 3 4 5 6 7 8 9 0 1
┌─┬─────────────────────────┬───────────────┬─────────────────┐
│N│    Bearer  Reference     │  Seq. number  │     Length      │
├─┼─────────────────────────┴─┬─────────────┴─────────────────┤
│0│      Time  stamp           │                               │
└─┴───────────────────────────┘                               
```

## FIG_8

```
 0                   1                   2                   3
 0 1 2 3 4 5 6 7 8 9 0 1 2 3 4 5 6 7 8 9 0 1 2 3 4 5 6 7 8 9 0 1
```

| N | 1 | Bearer Reference | Time stamp |
|---|---|------------------|------------|
| seq number | | Length | M | PT |

## FIG_9

```
 0                   1                   2                   3
 0 1 2 3 4 5 6 7 8 9 0 1 2 3 4 5 6 7 8 9 0 1 2 3 4 5 6 7 8 9 0 1
```

| N | 0 | Bearer Reference | Time stamp |
|---|---|------------------|------------|
| seq. number | | Length | |

## FIG_10

```
 0                   1                   2                   3
 0 1 2 3 4 5 6 7 8 9 0 1 2 3 4 5 6 7 8 9 0 1 2 3 4 5 6 7 8 9 0 1
```

| N | 0 | Bearer Reference | Time stamp |
|---|---|------------------|------------|
| seq. number | | | |

## FIG_11

BW savings

| Y-axis | X-axis |
|---|---|
| 70,0% | |
| 60,0% | |
| 50,0% | |
| 40,0% | |
| 30,0% | |
| 20,0% | |
| 10,0% | |
| 0,0% | 1  2  3  4  5  6  7  8  9  10 |

—♦—AMR 12.2/IPV

—✳—G726 32K 20ms/IPV4

—✗—3G.G711 20ms/MPLS

—●—G726 32K 20ms/MPLS

—■—AMR 12.2/MPLS

—▲—3G.G.711 20ms/IPV4

FIG_12

MGW1

MGW2

CS_ST1          CS_STn
CS_ST1          CS_STn

S1                    M1
S3                    M3

PDU_ST1          PDU_STn
PDU_ST1          PDU_STn

S2                    M2
S4                    M4

PDU_ST
PDU_ST

S5          M5
S6          M6

TN

EP 1 773 012 A1

| | European Patent Office | EUROPEAN SEARCH REPORT | Application Number EP 05 29 2065 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2003/193950 A1 (PHILIPS DAVID ET AL) 16 October 2003 (2003-10-16) * paragraphs [0077] - [0110]; figures 2,3A,3B,3C,4 * ----- | 1-29 | H04L12/66 H04L12/56 H04L29/06 |
| Y | EP 1 562 175 A (YAMAHA CORPORATION) 10 August 2005 (2005-08-10) * paragraph [0008] * * paragraphs [0019] - [0021]; figure 6 * ----- | 1-29 | |
| A | WO 02/29991 A (PROVISIONPOINT COMMUNICATIONS, LLC) 11 April 2002 (2002-04-11) * page 5, line 10 - page 6, line 8 * * page 9, line 33 - page 13, line 27; figures 5a,5b,6 * ----- | 2,5,27, 29 | |
| A | US 2003/074445 A1 (ROACH WAYNE C ET AL) 17 April 2003 (2003-04-17) * paragraph [0068]; figure 4 * * paragraph [0074]; figure 5 * * paragraphs [0095], [0106], [0114] * ----- | 1,4, 7-14,22, 23 | TECHNICAL FIELDS SEARCHED (IPC) H04L |
| A | US 6 791 944 B1 (DEMETRESCU CRISTIAN ET AL) 14 September 2004 (2004-09-14) * column 3, line 49 - column 5, line 14; figures 3,4 * * column 10, lines 26-64; figure 10 * ----- | 2,5, 16-20, 27,29 | |

-/--

The present search report has been drawn up for all claims

| Place of search | Date of completion of the search | Examiner |
|---|---|---|
| Munich | 1 December 2005 | Kreppel, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 05 29 2065

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SFIKAS G ET AL: "Migration to All IP UMTS networks: transport and mobility issues" WIRELESS COMMUNICATIONS AND NETWORKING CONFERNCE, 2000. WCNC. 2000 IEEE 23-28 SEPTEMBER 2000, PISCATAWAY, NJ, USA,IEEE, vol. 2, 23 September 2000 (2000-09-23), pages 787-792, XP010532350 ISBN: 0-7803-6596-8 Chapters I, II | 16,19,20 | |

-----

TECHNICAL FIELDS
SEARCHED (IPC)

The present search report has been drawn up for all claims

| Place of search | Date of completion of the search | Examiner |
|---|---|---|
| Munich | 1 December 2005 | Kreppel, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 29 2065

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2005

| Patent document cited in search report | | Publication date | Patent family member(s) | | Publication date |
|---|---|---|---|---|---|
| US 2003193950 | A1 | 16-10-2003 | AU EP WO | 2003219488 A1<br>1495612 A1<br>03088614 A1 | 27-10-2003<br>12-01-2005<br>23-10-2003 |
| EP 1562175 | A | 10-08-2005 | CN JP US | 1661989 A<br>2005221657 A<br>2005172790 A1 | 31-08-2005<br>18-08-2005<br>11-08-2005 |
| WO 0229991 | A | 11-04-2002 | AU | 9658601 A | 15-04-2002 |
| US 2003074445 | A1 | 17-04-2003 | NONE | | |
| US 6791944 | B1 | 14-09-2004 | AU AU BR CA CN JP JP KR | 744348 B2<br>4588099 A<br>9903958 A<br>2278904 A1<br>1248833 A<br>3691694 B2<br>2000134370 A<br>2000022835 A | 21-02-2002<br>16-03-2000<br>29-08-2000<br>02-03-2000<br>29-03-2000<br>07-09-2005<br>12-05-2000<br>25-04-2000 |

EPO FORM P0459

For more details about this annex : see Official Journal of the European Patent Office, No. 12/82